(19) Europäisches Patentamt / European Patent Office / Office européen des brevets

(11) **EP 3 631 349 B1**

(12) **EUROPÄISCHE PATENTSCHRIFT**

(45) Veröffentlichungstag und Bekanntmachung des Hinweises auf die Patenterteilung:
**21.12.2022 Patentblatt 2022/51**

(21) Anmeldenummer: **18728344.5**

(22) Anmeldetag: **28.05.2018**

(51) Internationale Patentklassifikation (IPC):
*F42B 19/12* (2006.01)    *F02K 5/00* (2006.01)
*F02C 7/04* (2006.01)    *F04D 19/00* (2006.01)
*F04D 25/02* (2006.01)

(52) Gemeinsame Patentklassifikation (CPC):
**F02C 7/04; F02K 5/00; F04D 19/00; F04D 25/028;
F42B 19/24;** F05D 2250/51; Y02E 10/74

(86) Internationale Anmeldenummer:
**PCT/EP2018/063914**

(87) Internationale Veröffentlichungsnummer:
**WO 2018/219856 (06.12.2018 Gazette 2018/49)**

(54) **REKUPERATIVER STRAHLANTRIEB**

RECUPERATIVE JET PROPULSION

PROPULSION À RÉACTION PAR RÉGÉNÉRATION

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **29.05.2017 CH 6922017**

(43) Veröffentlichungstag der Anmeldung:
**08.04.2020 Patentblatt 2020/15**

(73) Patentinhaber: **Ziegler, Martin
5035 Unterentfelden (CH)**

(72) Erfinder: **Ziegler, Martin
5035 Unterentfelden (CH)**

(74) Vertreter: **Troesch Scheidegger Werner AG
Schwäntenmos 14
8126 Zumikon (CH)**

(56) Entgegenhaltungen:
**EP-A2- 2 730 501        DE-A1-102004 008 805
GB-A- 2 530 324        US-A- 4 931 026
US-A1- 2009 194 997**

## Beschreibung

Die Erfindung betrifft ein Verfahren und eine Vorrichtung zur Steigerung der Effizienz von Strahlantrieben durch Rekuperation von Nutzleistung aus der Propulsionströmung. Sie wird als Antrieb für Flugzeuge beschrieben, kann aber allgemein für den Antrieb von Fahrzeugen jeder Art genutzt werden. Dazu gehören Flugzeuge, Landfahrzeuge, und Schiffe.

Strahlantriebe nach dem Stand der Technik fördern Luft oder Wasser mit Hilfe eines Propulsors und erzeugen einen Strahl hoher Geschwindigkeit, der rückwärts gegen die Fahrtrichtung ausgestossen wird. Der Propulsor wird mit einer Antriebsmaschine angetrieben, das kann eine Wärmekraftmaschine sein, oder ein Elektromotor. Nach der allgemeinen Strahltheorie ergibt sich eine Schubkraft aus der Differenz der Strömungsimpulse an den Bilanzgrenzen eines Strahlantriebs. Diese Theorie basiert auf den Kraftgesetzen von Newton, und so entsteht Schub als Reaktion auf Trägheitskräfte aus der Beschleunigung ruhender Fluide. Damit werden Fahrzeuge angetrieben.

Die Effizienz von Strahlantrieben ist das Verhältnis von Schubleistung zu aufgewendeter Leistung. Die Schubleistung ist das Produkt aus Schubkraft multipliziert mit der Geschwindigkeit des Fahrzeugs. Sie ist erforderlich, um das Fahrzeug durch Luft oder Wasser zu bewegen. Die aufgewendete Leistung ist mechanische Wellenleistung für den Propulsor aus der Antriebsmaschine. Darin enthalten sind die Verluste von kinetischer Energie im Abstrom des Strahlantriebs. Zusätzlich gibt es Wärmeverluste aus der Antriebsmaschine.

Der Energieverbrauch von Strahlantrieben ist gekennzeichnet durch die schubspezifische Leistung, das ist die Antriebsleistung $P$ pro Schubkraft $F$. Sie wird in Watt pro Newton gemessen, das ist eine Geschwindigkeit. Nach der Theorie von Rankine ergibt sich die schubspezifische Leistung des einfachen Strahlantriebs als arithmetisches Mittel der Geschwindigkeiten von Zustrom $v$ und Abstrom $c$ des Propellers. Darin sind die Strahlverluste im Nachstrom enthalten, aber nicht die Wärmeverluste der Antriebsmaschine.

$$\frac{P_0}{F_0} = \frac{c+v}{2} \qquad \text{schubspezifische Leistung nach Rankine} \qquad (G1)$$

Um die Effizienz eines Strahlantriebs zu steigern muss man dessen schubspezifische Leistung senken. Mathematisch bedeutet es, den Zähler des Bruches zu verkleinern oder seinen Nenner zu vergrössern. Die Theorie nach Rankine wird daher um eine Zusatzleistung $\Delta P$ und einen Zusatzkraft $\Delta F$ erweitert, und man erhält:

$$\frac{P}{F} = \frac{P_0 + \Delta P}{F_0 + \Delta F} < \frac{P_0}{F_0} \qquad \text{erweiterte schubspezifische Leistung} \qquad (G2)$$

Der Quotient $\frac{P}{F}$ ist stets kleiner als der Ursprungswert nach Rankine $\frac{P_0}{F_0}$ wenn die Zusatzleistung $\Delta P$ negativ und die Zusatzkraft $\Delta F$ positiv ist. Genau dann ist der Antrieb effizienter als bisher. Thermodynamisch betrachtet ist eine Leistung negativ, wenn sie von einer Maschine abgegeben wird und als Nutzleistung für einen Antrieb zur Verfügung steht. Eine Kraft ist positiv, wenn sie in Bewegungsrichtung wirkt.

Eine Nutzleistung kann man durch Rekuperation von Energie aus der Propulsionsströmung gewinnen. Bei Schiffen ist hier das Grimsche Leitrad bekannt, dass mit einer axialen Strömungsmaschine im Nachstrom der Schiffsschraube Energie zurückgewinnt und die Effizienz des Antriebs erhöht. Nachteilig ist hier die Interferenz zwischen Propeller und Leitrad, mit einer hohen dynamischen Belastung aller Schaufeln und Schubverlust am Hauptpropeller. Hier schafft DE 10 2004 008 805 Abhilfe, indem zwei hintereinander angeordnete axiale Schiffspropeller unabhängig voneinander angetrieben werden, wobei der hintere auch als Turbine arbeiten kann, der einen Teil der Strömungsenergie des vorderen Propellers zurückgewinnt. Ein ähnliches Verfahren verwendet US 4'931'026 mit drei hintereinander angeordneten axialen Laufrädern, bei denen das erste und dritte von einem Motor angetrieben sind, und das zweite als freilaufende Turbine arbeitet und einen Anteil der Strömungsenergie auf einen äusseren Schaufelkranz überträgt, der mit dem Turbinenrotor starr verbunden und Schub erzeugt. Schliesslich ist aus US2009/0194997 eine Turbine nach Darrieus bekannt, die von einem Wasserstrom seitlich angeströmt wird, wobei ihre Drehachse horizontal gelagert ist. Damit lässt sich aus einer Strömung Energie gewinnen.

Bei Flugzeugen ist eine Rekuperation von Nutzleistung aus der Propulsionsströmung noch nicht bekannt.

Aufgabe der Erfindung ist es, ein Verfahren und eine Vorrichtung zu finden, mit der man die Effizienz von Strahlantrieben durch Rekuperation von Nutzleistung aus der Propulsionsströmung nicht nur bei Schiffen, sondern auch bei Flugzeugen steigern kann. Dabei soll die dynamische Belastung des Propellers aus Strömungsinterferenzen geringer ausfallen als bisher. Die Aufgabe wird erfüllt durch ein Verfahren nach Anspruch 1 und eine Vorrichtung nach Anspruch 5 und folgende.

Die Erfindung wird anhand von 5 Figuren beschrieben:

1. Darstellung eines Strahlantriebs mit allen Hauptkomponenten als ein mögliches Ausführungsbeispiel für die Erfindung,
2. Darstellung des Wirkprinzips zur Rekuperation von Energie aus der Propulsionsströmung,
3. Darstellung der Strömungskräfte am Rotor der Radialturbine,
4. Beispiel für eine Rumpfintegration des Antriebs.
5. Beispiel mit Leistungsabgabe an einen offenen Rotor.

Der Propeller des Strahlantriebs erzeugt eine Propulsionsströmung. Diese wird hier genutzt, um eine Radialturbine anzutreiben, deren Zusatzleistung über ein Getriebe an die Antriebswelle des Propellers übertragen wird. Das entlastet den Antriebsmotor. Die Radialturbine wird so gestaltet, dass die an ihren Schaufelblättern entstehenden Strömungskräfte sowohl eine tangentiale Kraftkomponente $F_t$ in Drehrichtung aufweisen, als auch eine axiale Kraftkomponente $F_x$ in Bewegungsrichtung. Die tangentiale Komponente bewirkt ein Drehmoment an der Radialturbine. Daraus entsteht die Zusatzleistung $\Delta P$. Aus der axialen Kraftkomponente entsteht der Zusatzschub $\Delta F$.

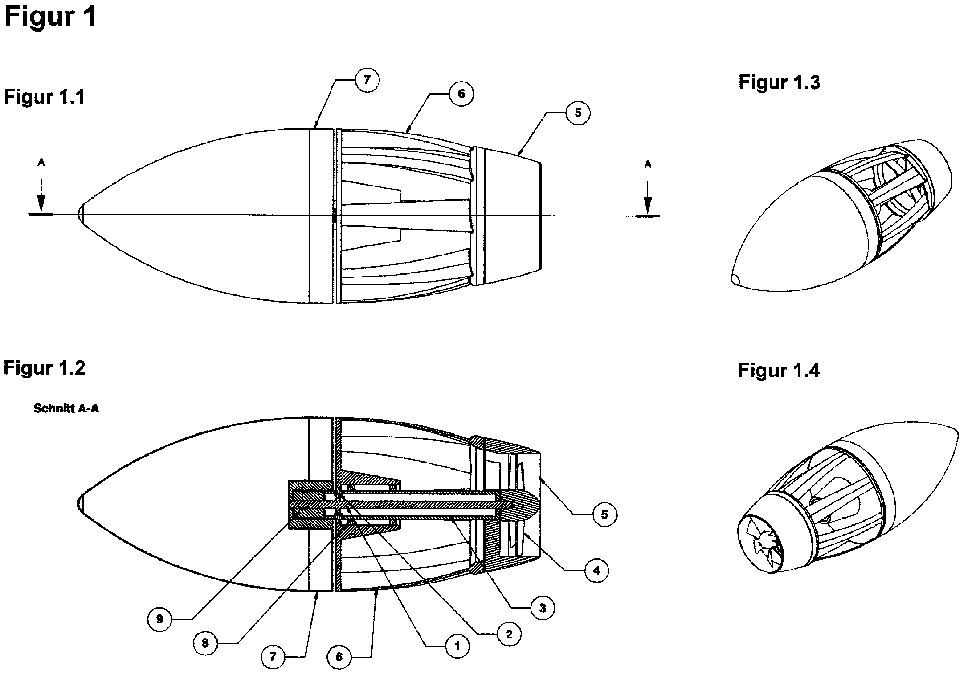

Figur 1 zeigt ein Ausführungsbeispiel des neuen Antriebs. Ein ummantelter Propeller (4) im Propellergehäuse (5) wird durch eine Antriebsmaschine (9) über die Antriebswelle (1) im Wellentunnel (3) angetrieben. Die Antriebswelle (1) ist über ein Getriebe (2) mit der Radialturbine (6) gekoppelt. Die Radialturbine (6) besitzt keinen Leitapparat und ist über Kugellager (8) auf dem Wellentunnel (3) gelagert. Sie dreht sich zwischen Rumpf (7) und Propellergehäuse (5) um die Längsachse. Ihre Schaufelkontur folgt der Form eines widerstandsarmen Strömungskörpers zwischen Rumpf (7) und Propellergehäuse (5), wobei sich der Rotordurchmesser von vorne nach hinten verjüngt. Der Propeller (4) fördert Luft aus dem Innenraum der Radialturbine (6) und erzeugt einen Strahl nach hinten. So entsteht der Schub für den Vortrieb. Weil dadurch der Druck im Innenraum der Radialturbine sinkt, strömt Luft von aussen durch den drehenden Rotor und bewirkt lokal wirksame Strömungskräfte an dessen Schaufeln. Dadurch entstehen Zusatzleistung und Zusatzschub, und wegen $\dfrac{P}{F} < \dfrac{P_0}{F_0}$ steigt die Effizienz des Antriebs.

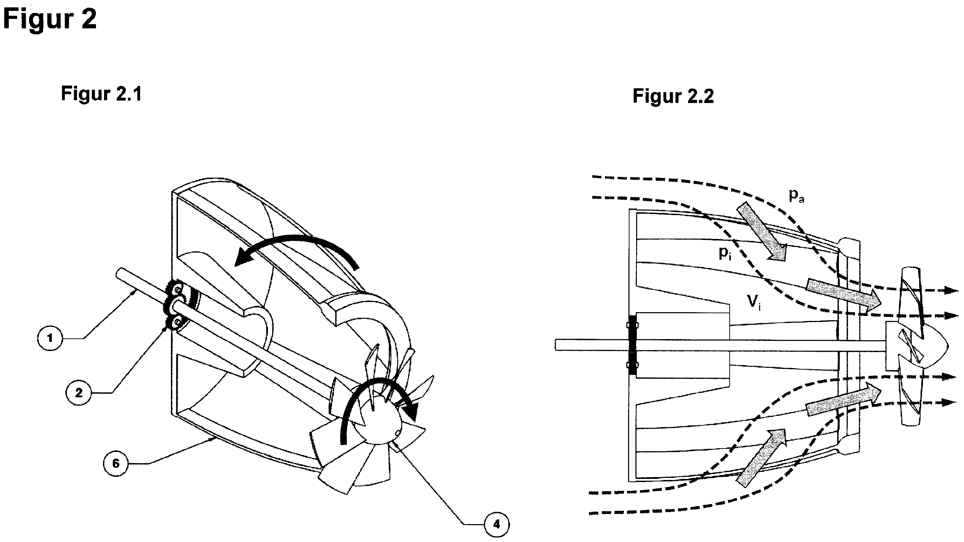

Figur 2 zeigt das Prinzip der Rekuperation aus der Propulsionsströmung.

In Figur 2.1 sind die wesentlichen Komponenten dargestellt. Der Propeller (4) wird durch die Antriebswelle (1) angetrieben. Sie ist über das Getriebe (2) mit dem Rotor (6) der Radialturbine gekoppelt. Das Getriebe (2) wird durch die dargestellten Zahnräder symbolisiert, wobei das Getriebe mechanisch (z.B. Planetengetriebe) oder (elektro-magnetisch (z.B. Magnetgetriebe, Ward-Leonardsatz, Motor-Generator mit elektronisch geregelter Kopplung) oder als Strömungsgetriebe (erweiterte Strömungskupplung mit Drehmomentwandler) ausgeführt sein kann. Das Fluid strömt dem Rotor aus der Umgebung ohne Drall zu. Die abgegebene Turbinenleistung entlastet die Antriebsmaschine. Propeller (4) und Turbine (6) drehen entgegengesetzt, das kompensiert Drehmomente aus dem Antrieb.

Figur 2.2 zeigt das entstehende Strömungsfeld. Der Propeller befördert Luft aus dem Volumen $V_i$ des Rotor-Innenraums. Dadurch sinkt dort der Innendruck $p_i$. Weil der Aussendruck $p_a$ nun höher ist, strömt Luft zwangsläufig von aussen nach und quert die rotierenden Schaufeln der Radialturbine. Dabei entstehen nutzbare Strömungskräfte.

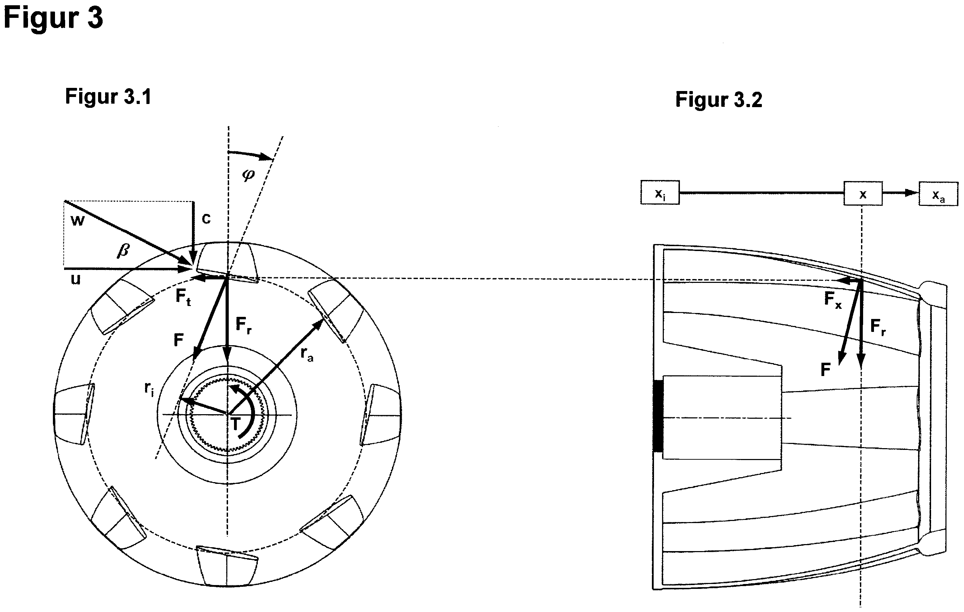

Figur 3 zeigt die Strömungskräfte an den Schaufeln des Turbinenrotors.

Figur 3.1 zeigt einen radialen Schaufelschnitt an einer beliebigen Stelle des Rotors (Schnittkoordinate $x_s$), der sich vom Rumpf (Längskoordinate $x_0$) bis zum Propellergehäuse (Längskoordinate $x_1$) erstreckt. Figur 3.2 zeigt einen Längsschnitt und die Lage des radialen Schnitts aus Figur 3.1.

In Figur 3.1 ist die Anströmung im radialen Schaufelschnitt dargestellt. Die Zuströmung c zur Turbine erfolgt in radialer Richtung ohne Drall. Ein Leitapparat fehlt. Durch Überlagerung mit der Blattanströmung u aus der Umfangsgeschwindigkeit entsteht an der Schaufel eine relative Anströmung w, die gegen die Tangente des Schnittkreises mit Radius $r_a$ geneigt ist. Die Schaufelblätter sind profiliert und gegen die Tangente des Schnittkreises verwunden. Die Verwindung der Profile nimmt von vorne nach hinten zu. Der Rotordurchmesser nimmt dabei ab. Aus der Anströmung des Schaufelschnittes mit relativer Geschwindigkeit w entsteht nun eine exzentrisch wirkende Auftriebskraft $F_a$, deren Wirklinie um einen Winkel $\varphi$ gegen die radiale Richtung geneigt ist und im Abstand $r_i$ von der Drehachse verläuft. So bewirkt die Auftriebskraft $F_a$ mit Abstand $r_i$ ein Drehmoment M um die Längsachse. Daraus entsteht eine nutzbare Zusatzleistung $\Delta P$, welche die Antriebsmaschine entlastet und den Zähler in Gleichung (G2) verkleinert.

Mit dem Neigungswinkel $\varphi$ kann man die Auftriebskraft $F_a$ in eine radiale Komponente $F_r$ und eine tangentiale Komponente $F_t$ zerlegen. Die radiale Komponente $F_r$ wirkt gegen die Zentrifugalkraft aus der Rotation. Sie entlastet die Schaufelblätter. Die tangentiale Komponente $F_t$ bewirkt das Drehmoment für die Zusatzleistung.

Im Längsschnitt nach Figur 3.2 sieht man die Neigung der Auftriebskraft $F_a$ in Flugrichtung. Durch die Verjüngung des Rotors von vorne nach hinten entsteht in der lokalen Schaufelströmung eine Kraftkomponente $F_x$ in Bewegungsrichtung. Das ist eine Zusatzkraft $\Delta F$, die den Nenner in Gleichung (G2) vergrössert und die Effizienz weiter erhöht.

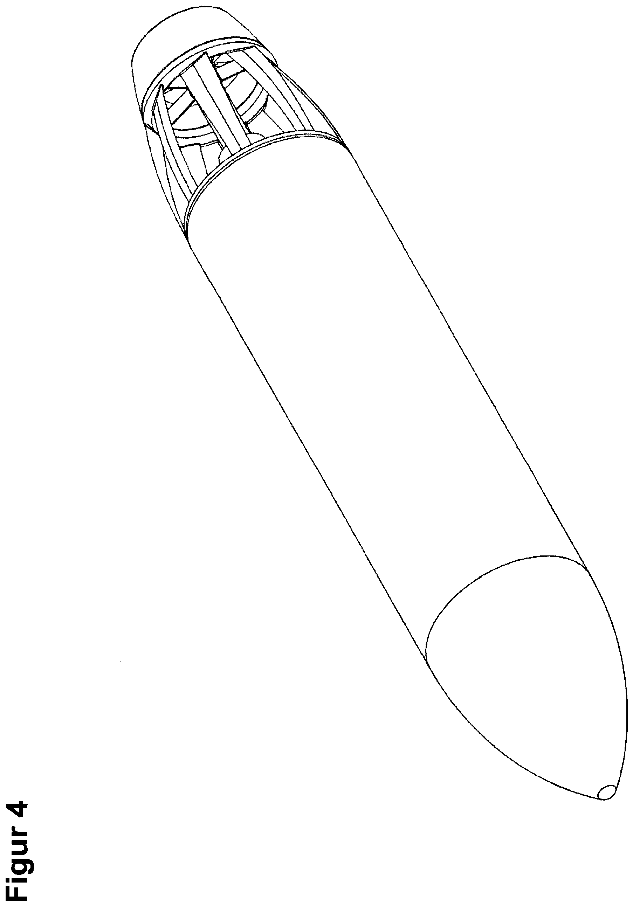

In Figur 4 ist der Antrieb beispielhaft als Bestandteil eines Flugzeugrumpfes dargestellt. Er befindet sich im Windschatten des Rumpfes. Der Propeller bezieht seinen Zustrom stets aus dem Innenvolumen der Radialturbine. Dort bleibt eine inhomogene Potenzialsenke während der gesamten Reise erhalten. Sie hat an jedem Raumpunkt einen lokalen Druck und eine lokale Geschwindigkeit. Daraus entstehen Strömungskräfte, die einen Zusatzschub und eine Zusatzleistung bewirken. So wird Leistung aus der dem Propeller zufliessenden Propulsionsströmung zurückgewonnen, das ist Rekuperation. Im Vergleich zur einfachen Theorie nach Rankine gilt nun Gleichung (G2), und der neue Antrieb ist effizienter als bisher möglich.

Bei Schiffen ist die Rückgewinnung von Nutzleistung aus der Nachlaufströmung des Propellers als Grimsches Leitrad bekannt Das ist eine axiale Strömungsmaschine. Nun wird Leistung aus dem Zustrom mit Hilfe einer radialen Strömungsmaschine zurückgewonnen. Im Unterschied zu bekannten Radialturbinen fehlt ein Leitapparat.

Das neue Prinzip der Rekuperation von Leistung aus der Propulsionsströmung kann man mit Luft oder mit Wasser oder mit einem anderen Fluid ausführen. Dadurch lässt sich die erforderliche Leistung der Antriebsmaschine (9) erheblich senken. Die Erfindung ist besonders geeignet für den Antrieb mit Elektro-Motoren.

Für geringe Geschwindigkeiten kann es von Vorteil sein, die Leistung der Radialturbine (6) nur zu einem ersten Teil an die Propellerwelle (1) zu übertragen. Ein zweiter Teil kann direkt an einen offenen Rotor (10) gegeben werden, dessen Propellerblätter (11) fest mit der Radialturbine (6) verbunden sind. In diesem Fall wird der offene Rotor (10) direkt von der Radialturbine (6) angetrieben.

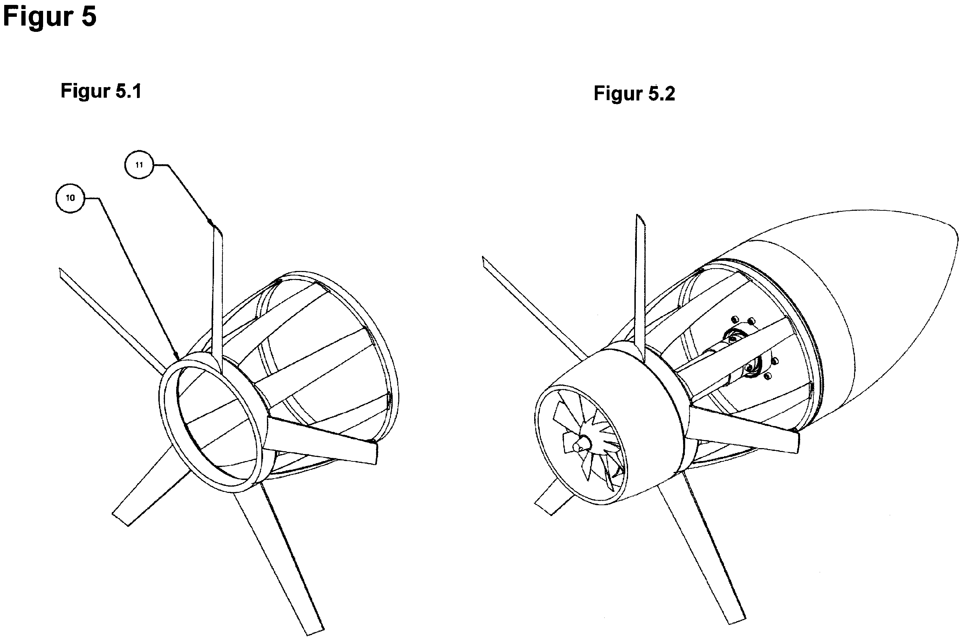

Figur 5 zeigt ein Ausführungsbeispiel einer solchen Konstruktion. Der offene Rotor (10) hat einen grösseren Durchmesser als die Radialturbine (6). Seine Propellerblätter (11) sind fest mit der Radialturbine verbunden und erzeugen Axialschub. Bei geringen Geschwindigkeiten ist diese Anordnung von Vorteil, weil die Turbinenleistung an einen Rotor mit grösserem Durchmesser gegeben wird, was die Strahlverluste mindert.

## Bezugsziffern

| | |
|---|---|
| 1 | Antriebswelle |
| 2 | Getriebe (mechanisch, magnetisch, fluid) |
| 3 | Wellentunnel |
| 4 | Propeller |
| 5 | Propellergehäuse |
| 6 | Radialturbine |
| 7 | Rumpf |
| 8 | Kugellager |
| 9 | Antriebsmaschine (Wärmekraftmaschine oder Elektromotor) |
| 10 | offener Rotor (open rotor) |
| 11 | Propellerblatt |

## Abkürzungen und Formelzeichen

| | |
|---|---|
| c | Strahlgeschwindigkeit (Propellertheorie von Rankine) |
| $c$ | absolute Strömungsgeschwindigkeit (Geschwindigkeitsdreieck) |
| F | Schubkraft |
| $F_0$ | Schubkraft nach Propellertheorie von Rankine |

| $\Delta F$ | Zusatzkraft |
|---|---|
| $F_a$ | Auftriebskraft |
| $F_r$ | Kraftkomponente in radialer Richtung |
| $F_t$ | Kraftkomponente in tangentialer Richtung |
| $F_x$ | Kraftkomponente in axialer Richtung |
| $M$ | Drehmoment |
| $p$ | Druck |
| $p_a$ | Aussendruck, ausserhalb der Radialturbine |
| $p_i$ | Innendruck, innerhalb der Radialturbine |
| $P$ | Antriebsleistung |
| $P_0$ | Antriebsleistung nach Propellertheorie von Rankine |
| $\Delta P$ | Zusatzleistung |
| $r$ | Radius |
| $r_a$ | Aussenradius |
| $r_i$ | Innenradius |
| $u$ | Umfangsgeschwindigkeit (Geschwindigkeitsdreieck) |
| $v$ | Reisegeschwindigkeit (Propellertheorie von Rankine) |
| $V_i$ | Volumen im Innenraum der Radialturbine |
| $w$ | relative Strömungsgeschwindigkeit (Geschwindigkeitsdreieck) |
| $x$ | Längskoordinate eines Rotorschnittes ($x_s = x_0 .. x_1$) |
| $\varphi$ | radialer Neigungswinkel der Schaufelkraft |

**Patentansprüche**

1. Verfahren zur Steigerung der Effizienz von Strahlantrieben durch Rekuperation von Nutzleistung aus der Propulsionsströmung, **dadurch gekennzeichnet, dass** ein von einer Antriebsmaschine (9) über eine Antriebswelle (1) angetriebener Mantel-Propeller (4) im Propellergehäuse (5) das Fluid für den Strahlantrieb aus dem Innenraum $V_i$ einer Radialturbine (6) fördert, dass der Propeller (4) dieses Fluid axial beschleunigt und nach hinten gegen die Fahrtrichtung ausstösst, dass neues Fluid aus der Umgebung direkt über die Schaufeln der rotierenden Radialturbine (6) ohne Leitapparat von aussen nach innen strömt und diese dadurch antreibt, und dass die Leistung der Radialturbine (6) über ein Getriebe (2) an die Antriebswelle (1) des Propellers (4) übertragen wird, was die Antriebsmaschine (9) entlastet.

2. Verfahren nach Anspruch 1, **dadurch gekennzeichnet, dass** das Fluid Luft ist.

3. Verfahren nach Anspruch 1, **dadurch gekennzeichnet, dass** das Fluid Wasser ist.

4. Verfahren nach Anspruch 1, **dadurch gekennzeichnet, dass** ein Teil der Leistung aus der Radialturbine (6) direkt an einen offenen Rotor (10) gegeben wird, dessen Propellerblätter (11) fest mit der Radialturbine verbunden sind, um Fluid aus der Umgebung zu beschleunigen und damit Axialschub zu erzeugen.

5. Vorrichtung zur Steigerung der Effizienz von Strahlantrieben durch Rekuperation von Nutzleistung aus der Propulsionsströmung, wobei sie einen von einer Antriebsmaschine (9) über eine Antriebswelle (1) angetriebenen Mantel-Propeller (4) im Propellergehäuse (5) enthält, und **dadurch gekennzeichnet, dass** sie eine von Fluid aus der Umgebung durchströmte Radialturbine (6) ohne Leitapparat enthält, wobei das Fluid zuerst durch die Radialturbine (6) und danach durch den Propeller (4) strömt, und dass die Radialturbine (6) mit einem Getriebe (2) verbunden ist, durch das ihre Leistung an die Antriebswelle (1) übertragbar ist.

6. Vorrichtung nach Anspruch **5, dadurch gekennzeichnet, dass** die Antriebsmaschine (9) ein Elektromotor ist.

7. Vorrichtung nach Anspruch **5, dadurch gekennzeichnet, dass** die Antriebsmaschine (9) eine Wärmekraftmaschine, beispielsweise eine Gasturbine oder ein Kolbenmotor, ist.

8. Vorrichtung nach Anspruch **5** wobei die Radialturbine (6) **dadurch gekennzeichnet ist, dass** sie keinen Leitapparat besitzt, dass sie zwischen Rumpf (7) und Propellergehäuse (5) positioniert ist, dass ihre Drehachse in Fahrtrichtung zeigt, dass der radiale Abstand der Schaufelkontur von der Drehachse von vorne nach hinten abnimmt, dass ihre Schaufeln wie Tragflächen profiliert sind, dass die Profile der Schaufeln in Längsrichtung verwunden sind, dass die Verwindung der Profile von vorne nach hinten zunimmt, und dass das Verhältnis von Schaufellänge zur mittleren Profiltiefe grösser ist als 4, so dass die Schaufeln wesentlich länger sind als breit.

9.  Vorrichtung nach Anspruch 8, **dadurch gekennzeichnet, dass** die Drehachse ihrer Radialturbine (6) koaxial zum Propeller (4) positioniert ist.

10. Vorrichtung nach Anspruch 8, **dadurch gekennzeichnet, dass** die Drehrichtung ihre Radialturbine (6) derjenigen des Propellers (4) entgegengesetzt ist.

11. Vorrichtung nach Anspruch 8, **dadurch gekennzeichnet, dass** ihre Radialturbine (6) einen offenen Rotor (10) umfasst, dessen Propellerblätter (11) fest mit der Radialturbine (6) verbunden sind.

12. Vorrichtung nach Anspruch 5, **dadurch gekennzeichnet, dass** das Getriebe (2) eine direkte Kraftübertragung umfasst, wobei die direkte Kraftübertragung ein Zahnradgetriebe oder ein Planetengetriebe umfasst.

13. Vorrichtung nach Anspruch 5, **dadurch gekennzeichnet, dass** das Getriebe (2) eine indirekte Kraftübertagung umfasst, wobei die indirekte Kraftübertragung eine magnetische, eine elektro-magnetische oder eine strömungstechnische Kraftübertragung umfasst, wobei die magnetische Kraftübertragung Permanentmagnete umfasst, wobei die elektro-magnetische Kraftübertragung einen Ward-Leonardsatz oder eine elektronisch geregelte Elektro-Motor/Generator-Kopplung umfasst und wobei die strömungstechnische Kraftübertragung eine erweiterte Strömungskupplung mit Drehmomentwandler umfasst.

## Claims

1.  Method for increasing the efficiency of jet propulsions by recuperating effective power from the propulsion flow, **characterized in that** a shell propeller (4) in a propeller housing (5) driven by an engine (9) via a drive shaft (1) conveys the fluid for the jet propulsion from the interior $V_i$ of a radial turbine (6), **in that** the propeller (4) accelerates this fluid axially and ejects it rearwardly against the direction of travel, **in that** new fluid from the environment flows directly over the blades of the rotating radial turbine (6) without diffuser from the outside inwardly and thereby drives the latter, and **in that** the power of the radial turbine (6) is transmitted to the drive shaft (1) of the propeller (4) via a transmission (2), which relieves the engine (9).

2.  Method according to claim 1, **characterized in that** the fluid is air.

3.  Method according to claim 1, **characterized in that** the fluid is water.

4.  Method according to claim 1, **characterized in that** that a part of the power from the radial turbine (6) is given directly to an open rotor (10), whose propeller blades (11) are fixedly connected to the radial turbine, to accelerate fluid from the environment and thus generate axial thrust.

5.  Device for increasing the efficiency of jet propulsions by recuperating effective power from the propulsive flow, comprising a shell propeller (4) in the propeller housing (5) driven by an engine (9) via a drive shaft (1), **characterized in in that** it comprises a radial turbine (6) without a diffuser through which fluid from the environment flows, wherein the fluid flowing first through the radial turbine (6) and then through the propeller (4), and **in that** the radial turbine (6) is connected to a transmission (2) by means of which its power can be transmitted to the drive shaft (1).

6.  Device according to claim 5, **characterized in that** the engine (9) is an electric motor.

7.  Device according to claim 5, **characterized in that** the engine (9) is a thermal engine, for example, a gas turbine or a piston engine.

8.  Device according to claim 5, **characterized in that** it has no diffuser, **in that** it is positioned between the fuselage (7) and the propeller housing (5), **in that** its axis of rotation points in the direction of travel, **in that** the radial distance of the blade contour from the axis of rotation decreases from front to rear, **in that** its blades are profiled like airfoils, **in that** the profiles of the blades are twisted in the longitudinal direction, **in that** the twist of the profiles increases from front to rear, and **in that** the ratio of blade length to mean profile depth is greater than 4, so that the blades are substantially longer than wide.

9. Device according to claim 8, **characterized in that** the axis of rotation of its radial turbine (6) is positioned coaxially to the propeller (4).

10. Device according to claim 8, **characterized in that** the direction of rotation of its radial turbine (6) is opposite to that of the propeller (4).

11. Device according to claim 8, **characterized in that** its radial turbine (6) comprises an open rotor (10) whose propeller blades (11) are fixedly connected to the radial turbine (6).

12. Device according to claim 5, **characterized in that** the transmission (2) comprises a direct power transmission, wherein the direct power transmission comprises a gear transmission or a planetary transmission.

13. Device according to claim 5, **characterized in that** the transmission (2) comprises an indirect power transmission, wherein the indirect power transmission comprises a magnetic, an electro-magnetic or a fluidic power transmission, wherein the magnetic power transmission comprises permanent magnets, wherein the electro-magnetic power transmission comprises a Ward-Leonard set or an electronically controlled electric motor/generator coupling, and wherein the fluidic power transmission comprises an extended fluidic coupling with torque converter.

**Revendications**

1. Procédé pour augmenter le rendement des propulsions par jet en récupérant la puissance effective du flux de propulsion, **caractérisé en ce qu'**une hélice à coquille (4) dans un carter d'hélice (5) entraînée par un moteur (9) par l'intermédiaire d'un arbre d'entraînement (1) transporte le fluide pour la propulsion par jet depuis l'intérieur $V_i$ d'une turbine radiale (6), en ce que l'hélice (4) accélère ce fluide axialement et l'éjecte vers l'arrière à l'encontre de la direction de déplacement, en ce que fluide nouveau provenant de l'environnement s'écoule directement de l'extérieur vers l'intérieur sur les aubes de la turbine radiale (6) en rotation sans diffuseur et entraîne ainsi celle-ci, et en ce que la puissance de la turbine radiale (6) est transmise à l'arbre d'entraînement (1) de l'hélice (4) par l'intermédiaire d'une transmission (2) qui décharge le moteur (9).

2. Procédé selon la revendication 1, **caractérisé en ce que** le fluide est de l'air.

3. Procédé selon la revendication 1, **caractérisé en ce que** le fluide est de l'eau.

4. Procédé selon la revendication 1, **caractérisé en ce qu'**une partie de l'énergie provenant de la turbine radiale (6) est donnée directement à un rotor ouvert (10), dont les pales d'hélice (11) sont reliées de manière fixe à la turbine radiale, pour accélérer le fluide provenant de l'environnement et ainsi générer une poussée axiale.

5. Dispositif pour augmenter le rendement des propulsions à réaction en récupérant la puissance effective du flux propulsif, comprenant une hélice à coquille (4) dans le carter d'hélice (5) entraînée par un moteur (9) via un arbre d'entraînement (1), **caractérisé en ce qu'**il comprend une turbine radiale (6) sans diffuseur à travers laquelle s'écoule le fluide provenant de l'environnement, le fluide s'écoulant d'abord à travers la turbine radiale (6) et ensuite à travers l'hélice (4), et **en ce que** la turbine radiale (6) est reliée à une transmission (2) au moyen de laquelle sa puissance peut être transmise à l'arbre d'entraînement (1).

6. Dispositif selon la revendication 5, **caractérisé en ce que** le moteur (9) est un moteur électrique.

7. Dispositif selon la revendication 5, **caractérisé en ce que** le moteur (9) est un moteur thermique, par exemple une turbine à gaz ou un moteur à piston.

8. Dispositif selon la revendication 5, **caractérisé en ce qu'**il ne comporte pas de diffuseur, en ce qu'il est positionné entre le fuselage (7) et le carter d'hélice (5), en ce que son axe de rotation est orienté dans le sens de translation, en ce que la distance radiale du contour de la pale par rapport à l'axe de rotation diminue de l'avant vers l'arrière, en ce que ses pales sont profilées comme des ailes, en ce que les profils des pales sont tordus dans le sens longitudinal, en ce que la torsion des profils augmente de l'avant vers l'arrière, et en ce que le rapport entre la longueur de la pale et la profondeur moyenne du profil est supérieur à 4, de sorte que les pales sont sensiblement plus longues que larges.

**9.** Dispositif selon la revendication 8, **caractérisé en ce que** l'axe de rotation de sa turbine radiale (6) est positionné coaxialement à l'hélice (4).

**10.** Dispositif selon la revendication 8, **caractérisé en ce que** le sens de rotation de sa turbine radiale (6) est opposé à celui de l'hélice (4).

**11.** Dispositif selon la revendication 8, **caractérisé en ce que** sa turbine radiale (6) comprend un rotor ouvert (10) dont les pales d'hélice (11) sont reliées de manière fixe à la turbine radiale (6).

**12.** Dispositif selon la revendication 5, **caractérisé en ce que** la transmission (2) comprend une transmission de puissance directe, dans laquelle la transmission de puissance directe comprend une transmission par engrenage ou une transmission planétaire.

**13.** Dispositif selon la revendication 5, **caractérisé en ce que** la transmission (2) comprend une transmission de puissance indirecte, dans laquelle la transmission de puissance indirecte comprend une transmission de puissance magnétique, électromagnétique ou fluidique, dans laquelle la transmission de puissance magnétique comprend des aimants permanents, dans laquelle la transmission de puissance électromagnétique comprend un ensemble Ward-Leonard ou un couplage moteur/générateur électrique à commande électronique, et dans laquelle la transmission de puissance fluidique comprend un couplage fluidique étendu avec convertisseur de couple.

# Figur 1

## Figur 1.1

## Figur 1.2

Schnitt A-A

## Figur 1.3

## Figur 1.4

# Figur 2

### Figur 2.1

### Figur 2.2

EP 3 631 349 B1

# Figur 3

## Figur 3.1

## Figur 3.2

EP 3 631 349 B1

Figur 4

# Figur 5

## Figur 5.2

## Figur 5.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004008805
- US 20090194997 A